# EUROPEAN PATENT APPLICATION

(11) **EP 4 502 038 A1**
(43) Date of publication of application: **05.02.2025**
(21) Application number: 23774870.2
(22) Date of filing: 20.03.2023
(51) Int. Cl.: C08L 23/00, C08F 255/02, C08L 51/06, C09D 5/02, C09D 123/04, C09D 123/10, C09D 133/00, C09J 123/04, C09J 123/08, C09J 123/10, C09J 123/14, C09J 133/00

(54) **NONAQUEOUS DISPERSION COMPOSITION, ADHESIVE AGENT COMPOSITION, HEAT-SEAL LACQUER, AND COATING COMPOSITION**

(30) Priority: 25.03.2022 JP 2022049735; 25.03.2022 JP 2022049736
(71) Applicant: Mitsubishi Chemical Corporation, Tokyo 100-8251 (JP)
(72) Inventor: SHOUJI Taeko, Tokyo 100-8251 (JP)
(74) Representative: Hoffmann Eitle
(86) International application number: PCT/JP2023/010895
(87) International publication number: WO 2023/182275

(57) **Abstract**

According to the present invention, a nonaqueous dispersion composition comprising an acrylic resin A, an olefin resin B, and an organic solvent E is provided. A post-heat treatment viscosity of the nonaqueous dispersion composition, which is measured at 25°C after a heat treatment at 70°C for l hour, is 20,000 mPa·s or less, the acrylic resin A comprises a constitutional unit derived from a (meth)acrylic monomer a, and the organic solvent E comprises an organic solvent E1 in which a value of a hydrogen bonding element δh in a Hansen solubility parameter is 7.0 MPa^{0.5} or more. The nonaqueous dispersion composition has excellent adhesive force to a polyolefinbased base material.

## Description

### [Technical Field]

The present invention relates to a nonaqueous dispersion composition, an adhesive agent composition, a heat-seal lacquer, and a coating composition.

Priority is claimed on Japanese Patent Application No. 2022-049735 and Japanese Patent Application No. 2022-049736, filed on March 25, 2022, the contents of which are incorporated herein by reference.

### [Background Art]

Polyolefin-based resins which include a polymer of an olefin-based monomer have been widely used in a wide variety of applications because the polyolefin-based resin is excellent in mechanical properties and chemical resistance, is low in cost, and is easy to mold. Furthermore, since these resins also have excellent recyclability, the applications of the resins are expanded further against the background of recent global environmental problems. However, due to the low polarity of polyolefin-based resins, it is generally believed that adhesion to a polyolefin-based base material is difficult.

As a method for improving the adhesiveness to a polyolefin-based base material, a method for chemically treating a surface of the polyolefin-based base material with chemicals or the like; a method for oxidizing the surface by corona discharge treatment, plasma treatment, flame treatment, or the like; and the like are known. However, these methods have a problem in that special equipment is required and an effect of improving the adhesiveness is insufficient.

On the other hand, as a method for improving the adhesiveness to a polyolefin-based base material, a method of applying inks, paints, or adhesive agents containing chlorinated polyolefin to the surface of the polyolefin-based base material is known. However, the use of a chlorine-containing compound such as a chlorinated polyolefin tends to be avoided due to the recent growing interest in environmental problems. Therefore, in recent years, there has been an increasing demand for a resin composition composed of chlorine-free compounds.

Patent Document 1 discloses a resin solution containing, as a resin which has high adhesiveness to a polyolefin-based base material and does not contain chlorine, a graft copolymer obtained by graft-polymerizing a specific monomer onto an olefin-based polymer.

### [Citation List]

### [Patent Documents]

[Patent Document 1]
Japanese Patent (Granted) Publication No. 4773041

### [Summary of Invention]

### [Technical Problem]

However, the resin disclosed in Patent Document 1 does not always have a sufficient adhesive force to the polyolefin-based base material.

In addition, for example, in a nonaqueous dispersion composition used as a heat-seal lacquer or a coating liquid, it is required that liquid stability be excellent and separation or solidification of the liquid be unlikely to occur.

An object of the present invention is to provide a nonaqueous dispersion composition having excellent adhesive force to a polyolefin-based base material.

### [Solution to Problem]

The gist of the present invention is the following [1] to [15].
[1] A nonaqueous dispersion composition, comprising:
   an acrylic resin A;
   an olefin resin B; and
   an organic solvent E,
   wherein the acrylic resin A comprises a constitutional unit derived from a (meth)acrylic monomer a,
   the organic solvent E comprises an organic solvent E1 in which a value of a hydrogen bonding element δh in a Hansen solubility parameter is 7.0 MPa^{0.5} or more, and
   a post-heat treatment viscosity of the nonaqueous dispersion composition, which is measured at 25°C after a heat treatment at 70°C for 1 hour, is 20,000 mPa·s or less.
[2] The nonaqueous dispersion composition according to [1],
   wherein a contained amount of the organic solvent E1 with respect to the organic solvent E is 10% by mass or more.
[3] A nonaqueous dispersion composition, comprising:
   an acrylic resin A;
   an olefin resin B; and
   an organic solvent E,
   wherein the acrylic resin A comprises a constitutional unit derived from a (meth)acrylic monomer a, and
   a weight-average molecular weight of the olefin resin B is 20,000 to 150,000.
[4] A nonaqueous dispersion composition, comprising:
   an acrylic resin A;
   an olefin resin B; and
   an organic solvent E,
   wherein the acrylic resin A comprises a constitutional unit derived from a (meth)acrylic monomer a,
   a weight-average molecular weight of the olefin resin B is 20,000 to 150,000, and
   the organic solvent E comprises an organic solvent E1 in which a value of a hydrogen bonding element δh in a Hansen solubility parameter is 7.0 MPa^{0.5} or more.
[5] The nonaqueous dispersion composition according to [4],
   wherein a contained amount of the organic solvent E1 with respect to the organic solvent E is 10% by mass or more.
[6] The nonaqueous dispersion composition according to any one of [1] to [5],
   wherein the acrylic resin A comprises no constitutional unit y derived from a monomer having a functional group reactive with an acid, or
   the acrylic resin A comprises the constitutional unit y and a proportion of a total mass of the constitutional unit y with respect to 100% by mass of a total mass of all constitutional units constituting the olefin resin B is less than 30% by mass.
[7] The nonaqueous dispersion composition according to any one of [1] to [6],
   wherein a crystal melting enthalpy of the olefin resin B is 5 to 50 J/g.
[8] The nonaqueous dispersion composition according to any one of [1] to [7],
   wherein a melting point of the olefin resin B is 40°C to 120°C.
[9] The nonaqueous dispersion composition according to any one of [1] to [8],
   wherein a crystallization temperature of the olefin resin B is 10°C to 60°C.
[10] The nonaqueous dispersion composition according to any one of [1] to [9],
   wherein the olefin resin B comprises at least one of an ethylene-derived constitutional unit or a propylene-derived constitutional unit, and
   a proportion of a total mass of the ethylene-derived constitutional unit and the propylene-derived constitutional unit with respect to a total mass of all constitutional units constituting the olefin resin B is 50% by mass or more.
[11] The nonaqueous dispersion composition according to any one of [1] to [10],
   wherein the olefin resin B is an ethylene-propylene copolymer or polypropylene.
[12] The nonaqueous dispersion composition according to any one of [1] to [11],
   wherein Wb/Wa, which represents a mass ratio of a total mass Wb of all constitutional units constituting the olefin resin B to a total mass Wa of the constitutional unit derived from the (meth)acrylic monomer a, is 20/80 to 90/10.
[13] The nonaqueous dispersion composition according to any one of [1] to [12], comprising:
   an acrylic olefin composite resin C which has the constitutional unit derived from the (meth)acrylic monomer a and a structure derived from the olefin resin B.
[14] An adhesive agent composition, comprising:
   the nonaqueous dispersion composition according to any one of [1] to [13].
[15] A heat-seal lacquer comprising:
   the nonaqueous dispersion composition according to any one of [1] to [13].
[16] A coating composition containing:
   the nonaqueous dispersion composition according to any one of [1] to [13].

### [Advantageous Effects of Invention]

According to the present invention, it is possible to provide a nonaqueous dispersion composition having excellent adhesive force to a polyolefin-based base material.

### [Description of Embodiments]

In the present invention, "(meth)acrylic" is a general term for "acrylic" and "methacrylic". In addition, "(meth)acrylate" is a general term for "acrylate" and "methacrylate". In addition, "(meth)acryloyl" means "acryloyl" or "methacryloyl". In addition, "(meth)acryloyloxy" means "acryloyloxy" or "methacryloyloxy".

In the present invention, "resin" includes a polymer or a copolymer, obtained by polymerizing one or more kinds of monomers. That is, the "resin" in the present invention may be a single polymer of a single copolymer, or may include a plurality of polymers, a plurality of copolymers, or both the polymer and the copolymer.

In the present invention, the nonaqueous dispersion composition means a composition in which a main component of a medium is an organic solvent and a resin stably dispersed in the medium is contained. It is necessary that the main component of the organic solvent which is the medium of the nonaqueous dispersion composition be an organic solvent having low olefin solubility, and when the main component of the organic solvent is an organic solvent having high olefin solubility, for example, an aromatic organic solvent such as toluene and xylene, the composition does not correspond to the nonaqueous dispersion composition. The main component of the organic solvent is a component which accounts for 50% by mass or more of the organic solvent.

### [Nonaqueous dispersion composition]

### <<First embodiment>>

A first embodiment of the nonaqueous dispersion composition according to the present invention is a nonaqueous dispersion composition containing an acrylic resin A, an olefin resin B, and an organic solvent E, in which the acrylic resin A contains a constitutional unit derived from a (meth)acrylic monomer a, the organic solvent E contains an organic solvent E1 in which a value of a hydrogen bonding element δh in a Hansen solubility parameter is 7.0 MPa^{0.5} or more, and a post-heat treatment viscosity of the nonaqueous dispersion composition, which is measured at 25°C after a heat treatment at 70°C for 1 hour, is 20,000 mPa·s or less.

Hereinafter, the first embodiment of the nonaqueous dispersion composition according to the present invention will be described with respect to each component and various characteristics.

### <Acrylic resin A>

In the first embodiment of the nonaqueous dispersion composition according to the present invention, the acrylic resin A contains the constitutional unit derived from the (meth)acrylic monomer a (hereinafter, also referred to as "constitutional unit derived from the (meth)acrylic monomer a"). That is, the acrylic resin A is a polymer containing at least one constitutional unit derived from the (meth)acrylic monomer a.

However, the acrylic resin A does not have a structure derived from the olefin resin B.

### ((Meth)acrylic monomer a)

The above-described (meth)acrylic monomer a is a monomer having a (meth)acryloyl group in the molecule. The above-described (meth)acrylic monomer a is used in synthesis of the above-described acrylic resin A. As non-limiting specific examples of the above-described (meth)acrylic monomer a are listed below:
alkyl (meth)acrylate having a linear or branched hydrocarbon skeleton, such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, isopentyl (meth)acrylate, n-hexyl (meth)acrylate, n-octyl (meth)acrylate, 2-ethylhexyl (meth)acrylate, lauryl (meth)acrylate, stearyl (meth)acrylate, isostearyl (meth)acrylate, and 4-tert-butylcyclohexyl (meth)acrylate;
alkyl (meth)acrylate having an alicyclic skeleton, such as cyclohexyl (meth)acrylate, isobornyl (meth)acrylate, adamantyl (meth)acrylate, tricyclodecanyl (meth)acrylate, dicyclopentadienyl (meth)acrylate, and dicyclopentanyl (meth)acrylate;
(meth)acrylic acid ester having a glycidyl group, such as glycidyl (meth)acrylate and hydroxybutyl (meth)acrylate glycidyl ether;
(meth)acrylic acid ester having an aromatic ring, such as phenoxy (meth)acrylate, benzyl (meth)acrylate, phenyl (meth)acrylate, phenoxyethyl (meth)acrylate, phenoxy polyethylene glycol (meth)acrylate, nonylphenol EO-adduct (meth)acrylate, and o-biphenyloxyethyl (meth)acrylate;
(meth)acrylic acid salt such as ammonium (meth)acrylate, sodium (meth)acrylate, and potassium (meth)acrylate;
(meth)acrylate having a cyclic ether, such as tetrahydrofurfuryl (meth)acrylate;
(meth)acrylate having an amino group, such as N-dimethylaminoethyl (meth)acrylate and N-diethylaminoethyl (meth)acrylate;
(meth)acrylamide derivative such as (meth)acrylamide, (meth)acrylamide diacetone acrylamide, N-methylol (meth)acrylamide, N-methoxymethyl (meth)acrylamide, N-ethoxymethyl (meth)acrylamide, N-butoxymethyl (meth)acrylamide, and (meth)acryloylmorpholine;
monomer having a phosphate group, such as 2-(meth)acryloyloxyethyl acid phosphate, 2-(meth)acryloyloxyethyl acid phosphate monoethanolamine salt, diphenyl ((meth)acryloyloxyethyl)phosphate, (meth)acryloyloxypropyl acid phosphate, 3-chloro-2-acid phosphooxypropyl (meth)acrylate, acid phosphooxypolyoxyethylene glycol mono(meth)acrylate, and acid phosphooxypolyoxypropylene glycol (meth)acrylate;
hydroxyalkyl (meth)acrylate such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, 1,2-dihydroxyethyl (meth)acrylate, 1,2-dihydroxypropyl (meth)acrylate, 1,2-dihydroxybutyl (meth)acrylate, 1,2-dihydroxy-5-ethylhexyl (meth)acrylate, 1,1-dihydroxyethyl (meth)acrylate, 1,1-dihydroxypropyl (meth)acrylate, 1,1-dihydroxybutyl (meth)acrylate, 1,2,3-trihydroxypropyl (meth)acrylate, 1,2,3-trihydroxybutyl (meth)acrylate, 1,1,2-trihydroxypropyl (meth)acrylate, and 1,1,2-trihydroxybutyl (meth)acrylate;
hydroxy (meth)acrylate having an aromatic ring, such as 2-hydroxy-3-phenoxypropyl (meth)acrylate;
hydroxypolyalkylene oxide (meth)acrylate such as hydroxypolyethylene oxide mono(meth)acrylate, hydroxypolypropylene oxide mono(meth)acrylate, hydroxy(polyethylene oxide-polypropylene oxide) mono(meth)acrylate, hydroxy(polyethylene oxide-propylene oxide) mono(meth)acrylate, hydroxy(polyethylene oxide-polytetramethylene oxide) mono(meth)acrylate, hydroxy(polyethylene oxide-tetramethylene oxide) mono(meth)acrylate, hydroxy(polypropylene oxide-polytetramethylene oxide) mono(meth)acrylate, hydroxy (polypropylene oxide-polytetramethylene oxide) mono(meth)acrylate, 1,2-dihydroxypolyethyl oxide (meth)acrylate, 1,2-dihydroxypolypropylene oxide (meth)acrylate, polyhydroxyalkyl (meth)acrylate, 1,2,3-trihydroxypropylene glycol (meth)acrylate, and 1,1,2-trihydroxypropylene glycol (meth)acrylate; and
(meth)acrylates having a carboxy group, such as acrylic acid, methacrylic acid, succinic acid mono(2-(meth)acryloyloxyethyl), and ω-carboxy-polycaprolactone mono(meth)acrylate.

It is sufficient that the above-described acrylic resin A contain at least one kind of the above-described constitutional unit derived from the (meth)acrylic monomer a, and it may contain two or more kinds thereof.

In a case of synthesizing the above-described acrylic resin A, the above-described (meth)acrylic monomer a can be used alone or in combination of two or more kinds thereof.

Among these, from the viewpoint of adhesive force to a polyolefin-based base material and solubility in a solvent, the above-described (meth)acrylic monomer a is preferably at least one selected from the group consisting of alkyl (meth)acrylates having a linear or branched hydrocarbon skeleton and alkyl (meth)acrylates having an alicyclic skeleton; more preferably at least one selected from the group consisting of methyl (meth)acrylate, ethyl (meth)acrylate, n-butyl (meth)acrylate, isobutyl (meth)acrylate, tert-butyl (meth)acrylate, cyclohexyl (meth)acrylate, and isobornyl (meth)acrylate; and still more preferably a combination including methyl (meth)acrylate and n-butyl (meth)acrylate.

### (Constitutional unit derived from other monomer)

The above-described acrylic resin A may have a constitutional unit derived from a monomer other than the (meth)acrylic monomer a (hereinafter, also referred to as "other monomer"), in addition to the above-described constitutional unit derived from the (meth)acrylic monomer a (also referred to as "constitutional unit derived from other monomer"). The other monomer is a monomer copolymerizable with the above-described (meth)acrylic monomer a or a monomer graft-polymerizable with the above-described olefin resin B. The above-described acrylic resin A may contain one or two or more kinds of the above-described constitutional units derived from the other monomer.

Non-limiting specific examples of the above-described other monomer are listed below:
aromatic vinyl monomer such as styrene, α-methylstyrene, p-methylstyrene, vinyltoluene, and chlorostyrene;
vinyl cyanide monomer such as acrylonitrile, methacrylonitrile, α-cyanoacrylate, dicyanovinylidene, and fumaronitrile;
monomer having a carboxy group, such as crotonic acid, isocrotonic acid, cinnamic acid, itaconic acid, maleic acid, fumaric acid, citraconic acid, mesaconic acid, and glutaconic acid;
sulfonic acid group-containing monomer such as vinylsulfonic acid and 2-acrylamido-2-methylpropanesulfonic acid;
polyfunctional monomer such as divinylbenzene, divinylnaphthalene, and divinyl ether;
vinyl-based monomer such as vinyl acetate and vinyl propionate; and
conjugated diene monomer such as 1,3-butadiene, isoprene, 2-chloro-1,3-butadiene, and chloroprene.

### (Constitutional unit x and constitutional unit y)

The above-described acrylic resin A may contain a constitutional unit y derived from a monomer having a functional group reactive with an acid (hereinafter, also referred to as "constitutional unit y"), but it is preferable that the above-described acrylic resin A does not contain the constitutional unit y, or when containing the constitutional unit y, a proportion of the total mass of the constitutional unit y with respect to the total mass of all constitutional units constituting the above-described olefin resin B be preferably less than 30% by mass, more preferably 10% by mass or less, and still more preferably 3% by mass or less.

In terms of liquid dispersion stability, it is preferable that the proportion of the total mass of the above-described constitutional unit y with respect to the total mass of all constitutional units constituting the above-described olefin resin B be less than 30% by mass.

The above-described monomer having a functional group reactive with an acid is, for example, a compound having a hydroxyl group and an unsaturated bond, or a compound having an epoxy group and an unsaturated bond.

The above-described compound having a hydroxyl group and an unsaturated bond (hereinafter, also referred to as "hydroxyl group-containing unsaturated bond compound") is not particularly limited as long as it is a compound having a hydroxyl group and an unsaturated bond in one molecule; and as non-limiting examples of the hydroxyl group-containing unsaturated bond compound, among the compounds mentioned as the above-described (meth)acrylic monomer a, compounds having a hydroxy group are exemplary examples.

The above-described compound having an epoxy group and an unsaturated bond (hereinafter, also referred to as "epoxy group-containing unsaturated bond compound") is not particularly limited as long as it is a compound having an epoxy group and an unsaturated bond in one molecule; and as non-limiting examples of the epoxy group-containing unsaturated bond compound, among the compounds mentioned as the above-described (meth)acrylic monomer a, compounds having a glycidyl group are exemplary examples.

When the above-described acrylic resin A contains the above-described constitutional unit y, the constitutional unit y may be one kind or two or more kinds.

The above-described acrylic resin A may contain a constitutional unit x derived from a monomer having a crosslinking functional group (hereinafter, also referred to as "constitutional unit x"), but it is preferable that the above-described acrylic resin A does not contain the constitutional unit x, or when containing the constitutional unit x, a proportion of the total mass of the constitutional unit x with respect to the total mass of all constitutional units in the above-described acrylic resin A be preferably less than 30% by mass, more preferably 10% by mass or less, and still more preferably 5% by mass or less.

Here, the above-described constitutional unit x does not include the above-described constitutional unit y.

In terms of liquid dispersion stability, it is preferable that the proportion of the total mass of the above-described constitutional unit x with respect to the total mass of all constitutional units in the above-described acrylic resin A be less than 30% by mass.

The above-described crosslinking functional group is, for example, a functional group selected from a hydroxy group, a carboxy group, and a glycidyl group.

As non-limiting examples of the above-described monomer having a crosslinking functional group, among the compounds mentioned as the above-described (meth)acrylic monomer a, compounds having at least one selected from the group consisting of a carboxy group, a hydroxy group, and a glycidyl group are exemplary examples.

When the above-described acrylic resin A contains the above-described constitutional unit x, the constitutional unit x may be one kind or two or more kinds.

When the above-described acrylic resin A contains both the above-described constitutional unit x and the above-described constitutional unit y, a proportion of the total mass of the above-described constitutional unit x and the above-described constitutional unit y is preferably less than 30% by mass, more preferably 10% by mass or less, and still more preferably 5% by mass or less with respect to the total mass of all constitutional units in the above-described acrylic resin A.

In terms of liquid dispersion stability, it is preferable that the proportion of the total mass of the above-described constitutional unit x and the above-described constitutional unit y with respect to the total mass of all constitutional units in the above-described acrylic resin A be less than 30% by mass.

### <Olefin resin B>

In the first embodiment of the nonaqueous dispersion composition according to the present invention, the above-described olefin resin B contains a constitutional unit derived from an olefin-based monomer b (may be also referred to as "constitutional unit derived from the olefin-based monomer b"). That is, the above-described olefin resin B is a polymer containing at least one constitutional unit derived from the olefin-based monomer b.

The above-described olefin resin B may have a reactive group such as a carboxy group, an epoxy group, an isocyanate group, a sulfonic acid group, a hydroxyl group, and an amino group. The above-described reactive group may be an acid anhydride structure of a carboxy group, that is, an acid anhydride group formed by dehydration condensation of two carboxy groups in an intermolecular manner or an intramolecular manner.

As non-limiting specific examples of the above-described olefin-based monomer b, for example, ethylene, propylene, 1-butene, 1-pentene, 1-hexene, 1-heptene, 1-octene, cyclopentene, cyclohexene, and norbornene are exemplary examples.

It is sufficient that the above-described olefin resin B contain at least one kind of the above-described constitutional unit derived from the olefin-based monomer b, and it may contain two or more kinds thereof.

In a case of synthesizing the above-described olefin resin B, the above-described olefin-based monomer b can be used alone or in combination of two or more kinds thereof.

Non-limiting specific examples of the above-described olefin resin B are listed below: homopolymer of the olefin-based monomer b; copolymer of ethylene and propylene; copolymer of at least one of ethylene or propylene and a monomer copolymerizable with ethylene and propylene (for example, α-olefin having 4 or more carbon atoms, such as 1-butene, 1-pentene, 1-hexene, 1-heptene, 1-octene, cyclopentene, cyclohexene, and norbornene); copolymer of two or more α-olefins selected from the group consisting of monomers mentioned as the α-olefin having 4 or more carbon atoms; copolymer of an α-olefin having 2 or more carbon atoms and a non-aromatic monomer other than the α-olefin, such as vinyl acetate, an acrylic acid ester, and a methacrylic acid ester; copolymer of an α-olefin having 2 or more carbon atoms and an aromatic monomer, or a hydrogenated product thereof; and a conjugated diene block copolymer or a hydrogenated product thereof.

A mass proportion of the above-described constitutional unit derived from the olefin-based monomer b is preferably 50% by mass or more, more preferably 80% by mass or more, and still more preferably 90% by mass or more with respect to the total mass of constitutional units constituting the above-described olefin resin B. As the mass proportion of the above-described constitutional unit derived from the olefin-based monomer b becomes higher, the adhesive force of the nonaqueous dispersion composition according to the embodiment of the present invention to the polyolefin-based base material tends to be improved.

The olefin resin B contains at least one of an ethylene-derived constitutional unit or a propylene-derived constitutional unit; and a proportion of the total mass of the ethylene-derived constitutional unit and the propylene-derived constitutional unit with respect to the total mass of all constitutional units derived from monomers, constituting the above-described olefin resin B, is preferably 50% by mass or more, more preferably 65% by mass or more, still more preferably 75% by mass or more, and may be 100% by mass. When the above-described proportion is the above-described lower limit value or more, excellent adhesive force of the nonaqueous dispersion composition according to the embodiment of the present invention to the polyolefin-based base material is likely to be obtained.

From the viewpoint of adhesive force to the polyolefin-based base material, the above-described olefin resin B is preferably a propylene-based copolymer having the propylene-derived constitutional unit; more preferably at least one selected from the group consisting of polypropylene, an ethylene-propylene copolymer, an ethylene-propylene-butene terpolymer, and a propylene-butene copolymer; and still more preferably an ethylene-propylene copolymer or polypropylene.

From the viewpoint of adhesive force to the polyolefin-based base material, a mass proportion of the propylene-derived constitutional unit in the above-described propylene-based polymer is preferably 50% by mass or more, more preferably 70% by mass or more, and still more preferably 90% by mass or more.

The polymer contained in the above-described olefin resin B may have any structure such as a random copolymer, a graft copolymer, a block copolymer, a linear structure, and a branched structure.

A weight-average molecular weight Mw (hereinafter, also referred to as "Mw") of the above-described olefin resin B, which is measured by gel permeation chromatography (GPC), is not particularly limited, but is preferably 20,000 to 150,000, more preferably 30,000 to 120,000, and still more preferably 40,000 to 90,000.

When Mw is the lower limit value or more of the above-described range, the adhesive force to the polyolefin-based base material is excellent; and when Mw is the upper limit value or less of the above-described range, dispersion stability of the nonaqueous dispersion composition according to the embodiment of the present invention is excellent, and separation is less likely to occur.

A crystal melting enthalpy of the above-described olefin resin B is not particularly limited, but is preferably 5 to 50 J/g, more preferably 10 to 40 J/g, and still more preferably 12 to 30 J/g. As the crystal melting enthalpy becomes higher, the degree of crystallinity of the resin becomes higher. When the above-described crystal melting enthalpy is the lower limit value or more of the above-described range, the adhesive force to the polyolefin-based base material is excellent; and when the above-described crystal melting enthalpy is the upper limit value or less of the above-described range, dispersion stability of the nonaqueous dispersion composition according to the embodiment of the present invention is excellent, and separation is less likely to occur.

A melting point Tm of the above-described olefin resin B (hereinafter, also referred to as "Tm") is not particularly limited, but is preferably 40°C to 120°C, more preferably 50°C to 100°C, and still more preferably 60°C to 90°C. When the above-described melting point is the lower limit value or more of the above-described range, the nonaqueous dispersion composition according to the embodiment of the present invention has excellent adhesive force to the polyolefin-based base material; and when the above-described melting point is the upper limit value or less of the above-described range, the liquid dispersion stability is excellent.

A crystallization temperature of the above-described olefin resin B is not particularly limited, but is preferably 10°C to 60°C, more preferably 15°C to 55°C, and still more preferably 20°C to 50°C. When the above-described crystallization temperature is the lower limit value or more of the above-described range, the adhesive force to the polyolefin-based base material is excellent; and when the above-described crystallization temperature is the upper limit value or less of the above-described range, the liquid dispersion stability is excellent.

In the present specification, the crystal melting enthalpy, the melting point Tm, and the crystallization temperature all mean values measured by differential scanning calorimetry (DSC).

The crystal melting enthalpy, the melting point Tm, and the crystallization temperature are determined, for example, by the following measurement method (I) using a differential scanning calorimeter DSC6200 manufactured by Seiko Instruments Inc.

### · Measurement method (I)

A sample (approximately 3 to 5 mg) is accurately weighed and put into a dedicated aluminum pan. A melting curve is obtained by melting the sample at 200°C, cooling the sample to 0°C at a rate of 10 °C/min, and heating the sample to 200°C at a rate of 10 °C/min, and a peak top temperature of a main endothermic peak in the final temperature raising stage is obtained as the melting point. In addition, the crystal melting enthalpy (joule/g) is obtained by dividing the heat quantity calculated from the area surrounded by the peak and the baseline by the weight of the sample. In addition, the peak top temperature of the main heat generation peak in the cooling stage and the last heating stage is obtained as the crystallization temperature.

A method for producing the olefin resin B is not particularly limited, and for example, the olefin resin B can be produced by polymerizing an olefin by a method such as radical polymerization, cationic polymerization, anionic polymerization, and coordination polymerization. Each of these polymerization methods may be a living polymerization method.

The above-described olefin resin B can be produced by a known production method. The above-described olefin resin B may be a commercially available product.

When the above-described olefin resin B has a reactive group, a contained amount of the reactive group is not particularly limited, but is preferably 1 mmol/g or less, more preferably 0.5 mmol/g or less, and still more preferably 0.3 mmol/g or less, per 1 g of the above-described olefin resin B.

From the viewpoint of liquid dispersion stability, it is preferable that the above-described olefin resin B does not contain an acid-modified polyolefin.

In the present specification, the above-described acid-modified polyolefin means a polyolefin having one or more reactive groups (including chlorinated reactive groups) selected from a carboxy group, a sulfonic acid group, and an acid anhydride structure of a carboxy group. Here, the above-described acid anhydride structure of the carboxy group means an acid anhydride group formed by dehydration condensation of two carboxy groups in an intermolecular manner or an intramolecular manner.

### <Organic solvent E>

In the first embodiment of the nonaqueous dispersion composition according to the present invention, the above-described organic solvent E contains an organic solvent E1 in which a value of a hydrogen bonding element δh in a Hansen solubility parameter is 7.0 MPa^{0.5} or more. The above-described organic solvent E1 contributes to improvement of the liquid stability of the nonaqueous dispersion composition according to the embodiment of the present invention.

As non-limiting specific examples of the above-described organic solvent E1, for example, propylene glycol monomethyl ether acetate (δh: 9.8 MPa^{0.5}), isobutyl alcohol (δh: 15.9 MPa^{0.5}), and ethyl acetate (δh: 7.2 MPa^{0.5}) are exemplary examples.

δh of the above-described organic solvent E1 is not particularly limited as long as it is 7.0 MPa^{0.5} or more, and it is preferably 8.0 MPa^{0.5} or more, more preferably 9.0 MPa^{0.5} or more, and still more preferably 9.5 MPa^{0.5} or more. The upper limit of δh is not particularly limited, but from the viewpoint of liquid dispersion stability, it is preferably 20 MPa^{0.5} or less and more preferably 19 MPa^{0.5} or less.

A dispersion force element δd of the above-described organic solvent E1 in the Hansen solubility parameter is not particularly limited, but is preferably 10 to 20 MPa^{0.5} and more preferably 13 to 18 MPa^{0.5}. In addition, a polarity element δp thereof is not particularly limited, but is preferably 0 to 15 MPa^{0.5} and more preferably 3 to 10 MPa^{0.5}.

The dispersion force element δd, the polarity element δp, and the hydrogen bonding element δh in the above-described Hansen solubility parameter can be calculated by a software package HSPiP 5th Edition 5.3.06 based on Hansen Solubility Parameters: A User's Handbook, CRC Press, Boca Raton FL, 2007.

The above-described organic solvent E may contain an organic solvent other than the above-described organic solvent E1 (hereinafter, also referred to as "organic solvent E2") as long as the effects of the present invention are not impaired.

The above-described organic solvent E2 is not particularly limited as long as it does not impair the dispersion stability of the nonaqueous dispersion composition according to the embodiment of the present invention. As non-limiting specific examples of the above-described organic solvent E2, for example, xylene (δh: 3.1 MPa^{0.5}) is an exemplary example.

A contained amount of the above-described organic solvent E1 is preferably 10% by mass or more, more preferably 30% by mass or more, and still more preferably 50% by mass or more with respect to the total mass of the above-described organic solvent E, that is, the total mass of the above-described organic solvent E1 and the above-described organic solvent E2. The upper limit of the contained amount of the above-described organic solvent E1 with respect to the total mass of the above-described organic solvent E may be 100% by mass, or less than 100% by mass.

### <Viscosity of non-dispersion composition>

The viscosity of the nonaqueous dispersion composition according to the first embodiment of the present invention at 25°C after a heat treatment at 70°C for 1 hour is 20,000 mPa·s or less, preferably 100 to 20,000 mPa·s, more preferably 300 to 15,000 mPa·s, and still more preferably 500 to 10,000 mPa·s. When the above-described viscosity is within the above-described range, handleability is favorable.

In the present specification, the viscosity is a value measured by a rotational viscometer method using a B-type viscometer at a rotation speed of 12 rpm, after the nonaqueous dispersion composition is temperature-adjusted to 25°C (room temperature). The solid content of the nonaqueous dispersion composition during the viscosity measurement is in a range of 45% ± 10%.

### <<Second embodiment>>

A second embodiment of the nonaqueous dispersion composition according to the present invention is a nonaqueous dispersion composition containing an acrylic resin A, an olefin resin B, and an organic solvent E, in which the acrylic resin A contains a constitutional unit derived from a (meth)acrylic monomer a, and a weight-average molecular weight of the olefin resin B is 20,000 to 150,000.

Hereinafter, the second embodiment of the nonaqueous dispersion composition according to the present invention will be described with respect to each component and various characteristics.

### <Acrylic resin A>

In the second embodiment of the nonaqueous dispersion composition according to the present invention, the above-described acrylic resin A is the same as the acrylic resin A in the first embodiment of the nonaqueous dispersion composition according to the present invention described above.

### <Olefin resin B>

In the second embodiment of the nonaqueous dispersion composition according to the present invention, the above-described olefin resin B is different from the olefin resin B in the first embodiment of the nonaqueous dispersion composition according to the present invention described above as follows, but the other points are the same as each other.

### (Difference from olefin resin B in first embodiment)

A weight-average molecular weight Mw (hereinafter, also referred to as "Mw") of the above-described olefin resin B in the second embodiment of the nonaqueous dispersion composition according to the present invention, which is measured by gel permeation chromatography (GPC), is 20,000 to 150,000, preferably 30,000 to 120,000 and more preferably 40,000 to 90,000.

When Mw is the lower limit value or more of the above-described range, the adhesive force to the polyolefin-based base material is excellent; and when Mw is the upper limit value or less of the above-described range, dispersion stability of the nonaqueous dispersion composition according to the embodiment of the present invention is excellent, and separation is less likely to occur.

### <Organic solvent E>

In the second embodiment of the nonaqueous dispersion composition according to the present invention, it is preferable that the above-described organic solvent E contain an organic solvent E1 in which a value of a hydrogen bonding element δh in a Hansen solubility parameter is 7.0 MPa^{0.5} or more. The above-described organic solvent E1 contributes to further improvement of the liquid stability of the nonaqueous dispersion composition according to the embodiment of the present invention.

Regarding the above-described organic solvent E and the above-described organic solvent E1, other points are the same as the organic solvent E and the organic solvent E1 in the first embodiment of the nonaqueous dispersion composition according to the present invention described above.

### <Viscosity of non-dispersion composition>

The viscosity of the nonaqueous dispersion composition according to the second embodiment of the present invention at 25°C after a heat treatment at 70°C for 1 hour is preferably 20,000 mPa·s or less, more preferably 100 to 20,000 mPa·s, still more preferably 300 to 15,000 mPa·s, and even more preferably 500 to 10,000 mPa·s. When the above-described viscosity is within the above-described range, handleability is more favorable. A method for measuring the above-described viscosity is the same as the method for measuring the viscosity in the first embodiment.

### <<Third embodiment>>

A third embodiment of the nonaqueous dispersion composition according to the present invention is a nonaqueous dispersion composition containing an acrylic resin A, an olefin resin B, and an organic solvent E, in which the acrylic resin A contains a constitutional unit derived from a (meth)acrylic monomer a, a weight-average molecular weight of the olefin resin B is 20,000 to 150,000, and the organic solvent E contains an organic solvent E1 in which a value of a hydrogen bonding element δh in a Hansen solubility parameter is 7.0 MPa^{0.5} or more.

### <Acrylic resin A>

The above-described acrylic resin A is the same as the acrylic resin A in the first embodiment of the nonaqueous dispersion composition according to the present invention described above.

### <Olefin resin B>

The above-described olefin resin B is the same as the olefin resin B in the second embodiment of the nonaqueous dispersion composition according to the present invention described above.

### <Organic solvent E>

The above-described organic solvent E is the same as the organic solvent E in the first embodiment of the nonaqueous dispersion composition according to the present invention described above.

### <Viscosity of non-dispersion composition>

In the third embodiment of the nonaqueous dispersion composition according to the present invention, the viscosity at 25°C after a heat treatment at 70°C for 1 hour is within the same preferred range and the same measuring method as in the second embodiment described above.

### «Configuration common to first to third embodiments»

A configuration common to the first, second, and third embodiments of the non-dispersion composition according to the present invention will be described.

### <Water content>

In the first, second, and third embodiments of the non-dispersion composition according to the present invention, a water content with respect to the total mass of the above-described nonaqueous dispersion composition is not particularly limited, but is preferably 1 % by mass or less, more preferably 0.5% by mass or less, and still more preferably 0.1% by mass or less.

### <Acrylic olefin composite resin C>

The first, second, and third embodiments of the nonaqueous dispersion composition according to the present invention may further contain an acrylic olefin composite resin C.

The above-described acrylic olefin composite resin C has a structure in which a polymer chain containing the above-described constitutional unit derived from the (meth)acrylic monomer a is chemically bonded to the above-described olefin resin B.

The above-described acrylic olefin composite resin C can be produced by a method of subjecting a monomer mixture containing the above-described (meth)acrylic monomer a to radical polymerization in the presence of the above-described olefin resin B.

The above-described monomer mixture may contain other monomers in addition to the above-described (meth)acrylic monomer a.

According to the production method, a mixture of the above-described acrylic resin A, which is a product obtained by polymerizing only the monomer in the above-described monomer mixture, the unreacted olefin resin B, and the acrylic olefin composite resin C is obtained. Hereinafter, the mixture may be referred to as "resin D". The resin D will be described later.

As the above-described (meth)acrylic monomer a, for example, compounds mentioned as the (meth)acrylic monomer a used for synthesizing the above-described acrylic resin A can be exemplary examples.

The above-described acrylic olefin composite resin C may have one or more kinds of constitutional units derived from monomers other than the above-described (meth)acrylic monomer a. The above-described other monomer is, for example, a monomer copolymerizable with the above-described (meth)acrylic monomer a or a monomer graft-polymerizable with the olefin resin B. As the above-described other monomer, for example, compounds mentioned as the other monomer used for synthesizing the above-described acrylic resin A can be exemplary examples.

### <Resin D>

In the above-described resin D, Wb/Wa, which represents a mass ratio of the total mass Wb of all constitutional units derived from monomers, constituting the olefin resin B, to the total mass Wa of the constitutional unit derived from the (meth)acrylic monomer a, is preferably 20/80 to 90/10, more preferably 30/70 to 80/20, and still more preferably 40/60 to 75/25.

In the resin D, the total of the above-described total mass Wa and the above-described total mass Wb with respect to the total mass of all constitutional units derived from monomers is preferably 60% by mass or more, more preferably 80% by mass or more, and may be 100% by mass.

### [Method for producing nonaqueous dispersion composition]

The nonaqueous dispersion composition according to the embodiment of the present invention can be produced by a method of subjecting a monomer mixture containing the (meth)acrylic monomer a to a radical polymerization reaction in a solution obtained by dissolving the olefin resin B in the organic solvent E, in the presence of a radical polymerization initiator.

The reaction solution after the radical polymerization reaction can be used as it is, or can be used as an adhesive agent composition, a heat-seal lacquer, a coating composition, or the like by adjusting the contained amount of solid contents as necessary.

When the reaction solution after the radical polymerization reaction has an extremely high viscosity and is solidified, the reaction solution may be heated at a temperature higher than 50°C to be liquefied. The nonaqueous dispersion composition liquefied by the heat treatment can be used as it is, or after adjusting the contained amount of solid contents as necessary for various applications such as an adhesive agent composition.

As the above-described radical polymerization initiator, organic peroxides and azo compounds are exemplary examples, and an organic peroxide is particularly preferable. The radical polymerization initiator may be used alone, or in combination of two or more thereof.

As specific examples of the organic peroxide which is the above-described radical polymerization initiator, o-methylbenzoyl peroxide, bis-3,5,5-trimethylhexanoyl peroxide, octanoyl peroxide, cyclohexanone peroxide, benzoyl peroxide, methyl ethyl ketone peroxide, dicumyl peroxide, lauroyl peroxide, diisopropylbenzene hydroperoxide, tert-butyl hydroperoxide, di-tert-butyl peroxide, 1,1,3,3-tetramethylbutylperoxy-2-ethylhexanoate, tert-hexylperoxy-2-ethylhexanoate, tert-butyl peroxypivalate, tert-butyl peroxyneoheptanoate, tert-butyl peroxyneodecanoate, tert-butyl peroxy-2-ethylhexanoate, tert-butyl peroxylaurate), tert-butyl peroxyacetate, tert-butyl peroxyisobutyrate, tert-butyl peroxyisononanoate, tert-butyl peroxybenzoate, tert-butyl peroxy-3,5,5-trimethylhexanoate, tert-butyl peroxymaleic acid, tert-butyl peroxyisopropyl monocarbonate, tert-butyl peroxy-2-ethylhexyl monocarbonate, di-tert-butyl peroxy hexahydro terephthalate, 1,6-di-(tert-butylperoxycarbonyloxy)hexane, tert-butylperoxyisonanoate, tert-butylperoxyisopropyl carbonate, and tert-butyl peroxy 2-ethylhexyl carbonate are exemplary examples. In addition, as the azo compound, 2,2'-azobisisobutyronitrile, 2,2'-azobis(2-methylbutyronitrile), 2,2'-azobis(2,4-dimethylvaleronitrile), and 2,2'-azobis(2,4-dimethyl-4-methoxyvaleronitrile) are exemplary examples.

Among these, diketimyl peroxide, di-tert-butyl peroxide, tert-butyl peroxy-2-ethylhexanoate, tert-butyl peroxy laurate, tert-butyl peroxy acetate, tert-butyl peroxy benzoate, tert-butyl peroxy-3,5,5-trimethylhexanoate, tert-butyl peroxy isopropyl moncarbonate, or tert-butyl peroxy-2-ethylhexyl moncarbonate, which is a radical polymerization initiator having a high hydrogen abstraction ability, is preferable.

An amount of the above-described radical polymerization initiator used is preferably 0.0001 to 10 parts by mass, more preferably 0.01 to 5 parts by mass, and still more preferably 0.1 to 2 parts by mass with respect to 100 parts by mass of the total of the monomer mixture containing the (meth)acrylic monomer a, and the olefin resin B. As the amount of the radical polymerization initiator used is larger, the adhesive force to the base material tends to be improved. As the amount of the radical polymerization initiator used is smaller, the liquid dispersion stability tends to be improved.

The above-described hydrogen abstraction ability referred to herein means an index indicating the ease of occurrence of a hydrogen abstraction reaction, which is one of the reactions involving a radical species generated from the organic peroxide. The hydrogen abstraction ability of the organic peroxide can be measured by methods described in various documents (for example, Polymer Journal, 29, 366 (1997), Polymer Journal, 29, 940 (1997), Polymer Journal, 29, 733 (1997), and the like).

In general, in the polymerization of vinyl monomers using an organic peroxide having high hydrogen abstraction ability, a polymerization reaction of the vinyl monomers, in which the generated radical species undergo an addition reaction to the vinyl monomers, is likely to occur. Therefore, using the radical polymerization initiator having high hydrogen abstraction ability, by performing the radical polymerization reaction of the monomer mixture containing the (meth)acrylic monomer a in the solution containing the olefin resin B, the composite resin C having a structure in which a polymer chain containing the (meth)acrylic monomer a is chemically bonded to the olefin resin B can be efficiently obtained.

A contained amount of the solid contents with respect to the total mass of the nonaqueous dispersion composition according to the embodiment of the present invention is preferably 5% to 80% by mass, more preferably 10% to 70% by mass, and still more preferably 20% to 60% by mass. When the above-described contained amount is within the above-described range, handleability is favorable.

In the present specification, the contained amount of solid contents is a value calculated by Solid contents (% by mass) = 100 - Organic solvent (% by mass). The contained amount of the organic solvent is a value measured by heating and drying at normal pressure.

The nonaqueous dispersion composition according to the embodiment of the present invention may contain a resin other than the above-described resin D as long as the adhesive force to the base material is not impaired. As the other resin, for example, polyaromatic vinyl compounds such as polystyrene; polyester resins; polyurethane resins; alkyd resins; epoxy resins; cellulose-based resins such as nitrocellulose, cellulose acetate butyrate, cellulose acetate propionate, and cellulose acetate; vinyl chloride-vinyl acetate copolymer-based resins such as vinyl chloride resin, vinyl chloride-vinyl acetate copolymer resin, and vinyl acetate resin are exemplary examples.

To the nonaqueous dispersion composition according to the embodiment of the present invention, for example, various additives such as electrically conductive agents such as carbon black and ferrite; inorganic fillers; lubricants; plasticizers; organic peroxides; brightening agents such as aluminum paste and mica; antioxidants; ultraviolet absorbers; weather resistance-imparting agents; radiation resistance-imparting agents; thermal stability-imparting agents; surface control agents; crosslinking agents; curing catalysts; pigment anti-settling agents; and silane coupling agent can be added as necessary by a general formulating method.

In particular, the nonaqueous dispersion composition according to the embodiment of the present invention has excellent adhesive force to a surface of a base material formed of a polyolefin-based resin, which has been difficult to achieve with conventional techniques.

For example, an adhesive force in which a peel strength obtained by a measuring method described later is 5 to 40 N/15 mm, preferably 10 to 30 N/15 mm, is obtained.

As the base material formed of a polyolefin-based resin, for example, films such as a polyethylene film (PE), a casting polypropylene film (CPP), an oriented polypropylene film (OPP), an ethylene-vinyl acetate copolymer film (EVA), an ethylene-vinyl alcohol copolymer film (EVOH), and a polyvinyl chloride film (PVC); and polyolefins such as high-pressure polyethylene, medium- and low-pressure polyethylene, polypropylene, and poly-4-methyl-1-pentene or polyolefin-based resins such as an ethylene-propylene copolymer, an ethylene-butene copolymer, and a propylene-butene copolymer are exemplary examples.

In addition, for a base material other than the above-described base material formed of a polyolefin-based resin, for example, the nonaqueous dispersion composition according to the embodiment of the present invention can be used as an adhesive agent for plastic films such as a polyethylene terephthalate film (PET), an amorphous polyethylene terephthalate film (A-PET), a polycarbonate film, a polybutylene terephthalate (PBT)-based resin film, a non-oriented nylon film, a biaxially oriented nylon film, a polyvinylidene chloride film, a polyvinyl alcohol film, and a polystyrene film; polymer base materials such as a polymethyl methacrylate, an acrylic resin such as a copolymer having a constitutional unit derived from methyl methacrylate, a polyester resin, a resin alloy composed of polypropylene and synthetic rubber, a polyamide resin, an unsaturated polyester resin, a polybutylene terephthalate resin, a polycarbonate resin, and a polystyrene resin; metal base materials such as a steel sheet which have not been surface-treated and a steel sheet which have been plated with an oxide film of zinc or aluminum; or non-ferrous metal base materials such as a copper plate, an aluminum plate, an aluminum foil, an aluminum alloy plate, and a titanium plate.

The adhesive agent composition according to the embodiment of the present invention contains the nonaqueous dispersion composition according to the embodiment of the present invention. As specific applications of the adhesive agent composition, for example, a heat-seal lacquer, a hot melt, and the like are exemplary examples.

The heat-seal lacquer is a lacquer-type adhesive agent composition for hermetically sealing packaging containers for foods, pharmaceuticals, industrial products, daily necessities, cosmetics and the like with a lid, and is used for various plastic films, deposited films, aluminum foils, papers, non-woven fabrics, glass, and the like as a packaging container or a lid. The above-described aluminum foil may be a single layer of aluminum foil, or a laminate containing an aluminum foil and a sealant film (for example, a laminate having an aluminum foil, an adhesive agent layer, and a sealant film in this order). When the above-described laminate is used as a lid material, the adhesive agent composition according to the embodiment of the present invention is preferably used as an adhesive agent layer interposed between the sealant film and the container.

As a method of applying the adhesive agent composition according to the embodiment of the present invention, for example, a bar coater, a gravure coating method, a roll coating method, a knife coating method, and a kiss coating method are exemplary examples. After the above-described adhesive agent composition is applied onto the base material, the adhesive agent composition may be dried by heating, and as drying conditions for coating on the aluminum foil, for example, it is preferable that drying be carried out at 100°C to 200°C for 5 to 1000 seconds. A thickness of the above-described adhesive agent composition after drying by heating is appropriately set according to the lid material and container to be adhered, and is preferably 0.1 to 40 µm, more preferably 1 to 20 µm, and still more preferably 3 to 15 µm.

The coating composition according to the embodiment of the present invention contains the nonaqueous dispersion composition according to the embodiment of the present invention.

As specific examples of a coating method for applying the coating composition according to the embodiment of the present invention, for example, a spray coating method, a brush coating method, a dip coating method, a roll coating method, and a flow coating method are exemplary examples. A temperature and time for drying the applied coating composition according to the embodiment of the present invention can be appropriately selected depending on the type, contained amount, and the like of the solvent in the composition. From the viewpoint of heat resistance of the base material, the temperature for drying the above-described composition is preferably room temperature to 200°C. In addition, from the viewpoint of heat resistance of the base material, the temperature for drying the above-described composition is preferably a heat resistance temperature or lower of the base material. From the viewpoint of drying properties of the above-described composition, the drying time of the above-described composition is preferably 1 to 30 minutes or longer, and can be set according to the purpose in consideration of the evaporation rate of the organic solvent to be used, drying conditions, and the like.

### [Examples]

Hereinafter, the present invention will be described in more detail with reference to Examples, but the present invention is not limited to these examples.

Examples 1 to 9 are Examples, and Examples 10 to 12 are Comparative Examples.

### [Method for measuring weight-average molecular weight (Mw)]

A high-speed GPC apparatus HLC-8320 GPC model (detector: RI detector) manufactured by Tosoh Corporation was used for a measurement of the weight-average molecular weight. In the measurement, two TSKgel superHZM-M (6.0 mmID × 15 cmL) manufactured by Tosoh Corporation and one TSKguardcolumn super HZ-H (4.6 nunlD × 3.5 cmL) manufactured by Tosoh Corporation were connected and used as a column. In the measurement, tetrahydrofuran (containing dibutylhydroxytoluene as a stabilizer) was used as an eluent, a flow rate was set to 0.5 mL/min, an inlet temperature was set to 40°C, an oven temperature was set to 40°C, and an RI detector temperature was set to 40°C. In the measurement, 10 µL of a resin concentration adjusted with tetrahydrofuran to 0.27% by mass was injected as a sample.

### [Method for measuring adhesive force to polyolefin base material]

A resin solution of 20% vinyl chloride-vinyl acetate copolymer (manufactured by Wacker, VINNOL H15/45M) in acetone was applied onto a hard aluminum foil (manufactured by Takeuchi Corporation, A1N30H-H18) with a bar coater so that a thickness after drying was 1 µm, and dried at 180°C for 3 minutes, and a surface of the hard aluminum foil was treated with a primer. The resin solution immediately after preparation for solvent solubility evaluation was applied onto the primer surface of the hard aluminum foil with a bar coater so that a thickness after drying was 5 µm, and dried at 180°C for 3 minutes. Next, a CPP film (manufactured by Mitsubishi Chemical Corporation, SuperFOIL E0025NA) was superimposed on the coated surface, and sealed at 180°C and 0.5 kgf/cm² for 2 seconds with a heat seal tester (manufactured by TESTER SANGYO CO., LTD., TP-701). The sealed portion was cut into a width of 15 mm and pulled in a direction of 180° at a speed of 250 mm/min using a tensile tester (manufactured by Shimadzu Corporation, small desktop tester EZ) to measure a peel strength (unit: N/15 mm).

### [Material]

### <(Meth)acrylic monomer>

MMA: methyl methacrylate (manufactured by Mitsubishi Chemical Corporation, Acryester M)
nBMA: n-butyl methacrylate (manufactured by Mitsubishi Chemical Corporation, Acryester B)

### <Olefin resin>

S-600: polypropylene (manufactured by Idemitsu Kosan Co., Ltd., L-MODU S600)
S-400: polypropylene (manufactured by Idemitsu Kosan Co., Ltd., L-MODU S400)
S-410: polypropylene (manufactured by Idemitsu Kosan Co., Ltd., L-MODU S410)
S-901: polypropylene (manufactured by Idemitsu Kosan Co., Ltd., L-MODU S901)
PP1602: ethylene-propylene copolymer resin (manufactured by CLARIANT, LICOCENE PP1602)
PP2602: ethylene-propylene copolymer resin (manufactured by CLARIANT, LICOCENE PP2602)
PP6102: ethylene-propylene copolymer resin (manufactured by CLARIANT, LICOCENE PP6102)

Table 1 shows Mw, the crystal melting enthalpy [J/g], the melting point Tm [°C], and the crystallization temperature [°C] of the olefin resin. The crystal melting enthalpy, the melting point Tm, and the crystallization temperature were determined by the following measurement method (I) using a differential scanning calorimeter (manufactured by Seiko Instruments Inc., DSC6200).

### · Measurement method (I)

A sample (approximately 3 to 5 mg) was accurately weighed and put into an dedicated aluminum pan. A melting curve was obtained by melting the sample at 200°C, cooling the sample to 0°C at a rate of 10 °C/min, and heating the sample to 200°C at a rate of 10 °C/min, and a peak top temperature of a main endothermic peak in the final temperature raising stage was obtained as the melting point. In addition, the crystal melting enthalpy (joule/g) was obtained by dividing the heat quantity calculated from the area surrounded by the peak and the baseline by the weight of the sample. In addition, the peak top temperature of the main heat generation peak in the cooling stage and the last heating stage was obtained as the crystallization temperature.

**[Table 1]**

| Olefin resin | | | | |
|---|---|---|---|---|
| Name | Mw | Crystal melting enthalpy [J/g] | Melting point Tm [° C] | Crystallization temperature [° C] |
| S-400 | 70,260 | 20.2 | 72.4 | 27.2 |
| S-410 | 70,625 | 14.3 | 74.1 | 36.3 |
| S-600 | 88,387 | 19.9 | 76.1 | 26.6 |
| S-901 | 151,579 | 22.3 | 75.1 | 26.4 |
| PP1602 | 61,532 | 15.5 | 70.1 | 27.6 |
| PP2602 | 45,485 | 25.8 | 84.6 | 45.1 |
| PP6102 | 5,672 | 53.7 | 172.6 | 97.1 |

### <Organic solvent>

PMA: propylene glycol monomethyl ether acetate
iBuOH: isobutyl alcohol
EtOAc: ethyl acetate
XY: xylene

Table 2 shows Hansen solubility parameters (δd, δp, δh) of PMA, iBuOH, EtOAc, and XY. "δd, δp, and δh" in Table 2 are values calculated by the above-described software package HSPiP 5th Edition 5.3.06.

**[Table 2]**

| Organic solvent | | | |
|---|---|---|---|
| Abbreviation | Hansen solubility parameter [MPa^{0.5}] | | |
| | δd | δp | δh |
| PMA | 15.6 | 5.6 | 9.8 |
| iBuOH | 15.1 | 5.7 | 15.9 |
| EtOAc | 15.8 | 5.3 | 7.2 |
| XY | 17.8 | 1.0 | 3.1 |

### <Polymerization initiator>

PERBUTYL O: tert-butyl peroxy-2-ethylhexanoate (manufactured by NOF CORPORATION, PERBUTYL O)
PERBUTYL D: di-tert-butyl peroxide (manufactured by NOF CORPORATION, PERBUTYL D)

### [Examples 1 to 3]

PMA was used as the organic solvent, and the polymerization temperature was set to 140°C.

60 parts by mass of the olefin resin shown in Table 3 was heated and dissolved in 75 parts by mass of the above-described organic solvent in a polymerization container equipped with a stirrer, a cooling pipe, a dropping funnel, and a thermometer. The inside of the polymerization apparatus was sufficiently replaced with nitrogen; and while maintaining the liquid temperature in the polymerization container at the polymerization temperature and stirring, 5 parts by mass of the above-described organic solvent and 0.13 parts by mass of PERBUTYL D were added thereto. After 30 minutes, 10 parts by mass of MMA, 30 parts by mass of nBMA, and 0.08 parts by mass of PERBUTYL D were added dropwise thereto over 1.5 hours, the mixture was further reacted for 1 hour, 10 parts by mass of the above-described organic solvent and 0.35 parts by mass of PERBUTYL D were added thereto, and the mixture was further reacted for 3 hours. 50 parts by mass of PMA was added thereto to terminate the reaction, and the reaction solution was cooled to room temperature to obtain a nonaqueous dispersion composition.

A ratio of the mass (Wb) of the olefin resin to the total mass (Wa) of MMA and nBMA was 60/40.

### <Contained amount of solid content>

The contained amount of solid contents of the obtained nonaqueous dispersion composition is shown in Table 3.

### <Viscosity>

The viscosity of the nonaqueous dispersion composition immediately after the production (pre-heat treatment viscosity) was measured. In addition, after the production, the nonaqueous dispersion composition stored at room temperature for 1 day was heated to 70°C, maintained at 70°C for 1 hour, and cooled to room temperature, and the viscosity thereof (post-heat treatment viscosity) was measured. The results are shown in Table 3. In the table, "Solidification" indicates that the fluidity was lost and the viscosity was difficult to measure; and "Separation" indicates that the resin and the medium were separated from each other and the viscosity was not measured (the same applies hereinafter).

### <Adhesive force>

The adhesive force to a polyolefin base material was measured by the above-described method. When separation or solidification occurred after the heat treatment, the adhesive force was not evaluated. The results are shown in Table 3 (the same applies hereinafter).

### [Examples 4 and 5]

PMA was used as the organic solvent, the polymerization temperature was set to 85°C, and PERBUTYL O was used as the polymerization initiator. A nonaqueous dispersion composition was produced in the same manner as in Example 1, using the olefin resin shown in Table 3.

The contained amount of solid contents of the obtained nonaqueous dispersion composition is shown in Table 3.

The pre-heat treatment viscosity and the post-heat treatment viscosity were measured in the same manner as in Example 1. The results are shown in Table 3.

The adhesive force to a polyolefin base material was measured in the same manner as in Example 1. The results are shown in Table 3.

### [Examples 6 to 8]

iBuOH was used as the organic solvent, the polymerization temperature was set to 85°C, and PERBUTYL O was used as the polymerization initiator. A nonaqueous dispersion composition was produced in the same manner as in Example 1, using the olefin resin shown in Table 3.

The contained amount of solid contents of the obtained nonaqueous dispersion composition is shown in Table 3.

The pre-heat treatment viscosity and the post-heat treatment viscosity were measured in the same manner as in Example 1. The results are shown in Table 3.

The adhesive force to a polyolefin base material was measured in the same manner as in Example 1. The results are shown in Table 3.

### [Examples 9 to 11]

EtOAc was used as the solvent, the polymerization temperature was set to the boiling point of the reaction solution, and PERBUTYL O was used as the polymerization initiator. A nonaqueous dispersion composition was produced in the same manner as in Example 1, using the olefin resin shown in Table 3.

The contained amount of solid contents of the obtained nonaqueous dispersion composition is shown in Table 3.

The pre-heat treatment viscosity and the post-heat treatment viscosity were measured in the same manner as in Example 1. The results are shown in Table 3.

The adhesive force to a polyolefin base material was measured in the same manner as in Example 1. The results are shown in Table 3.

### [Example 12]

XY was used as the organic solvent, and the polymerization temperature was set to the boiling point of the reaction solution. A nonaqueous dispersion composition was produced in the same manner as in Example 1, using the olefin resin shown in Table 3.

The contained amount of solid contents of the obtained nonaqueous dispersion composition is shown in Table 3.

The pre-heat treatment viscosity and the post-heat treatment viscosity were measured in the same manner as in Example 1. The results are shown in Table 3.

The adhesive force to a polyolefin base material was measured in the same manner as in Example 1. The results are shown in Table 3.

**[Table 3]**

| | Acrylic unit | Olefin resin | | | Organic solvent | | Contained amount of solid contents [% by mass] | Viscosity | | Adhesive force [N/15 mm] | Comprehensive determination |
|---|---|---|---|---|---|---|---|---|---|---|---|
| | Constitutional unit v | Name | Mw | Crystal melting enthalpy [J/g] | Name | δh [MPa^{0.5}] | | Pre-heat treatment [mPa·s] | Post-heat treatment [mPa·s] | | |
| Example 1 | Not included | S-600 | 88,387 | 199 | PMA | 9.8 | 41.7 | 12,610 | 8,020 | 17 | A |
| Example 2 | Not included | PP1602 | 61.532 | 15.5 | PMA | 9.8 | 40.4 | Solidification | 440 | 13.2 | A |
| Example 3 | Not included | PP2602 | 45.485 | 25.8 | PMA | 9.8 | 40.9 | Solidification | 1,990 | 14.8 | A |
| Example 4 | Not included | PP1602 | 61,532 | 15.5 | PMA | 9.8 | 43.6 | 1,830 | 1,900 | 16.4 | A |
| Example 5 | Not included | S-400 | 70,260 | 20.2 | PMA | 9.8 | 44.8 | 2,300 | 1,832 | 18.3 | A |
| Example 6 | Not included | PP1602 | 61,532 | 15.5 | iBuOH | 15.9 | 429 | 5,720 | 4,880 | 15.4 | A |
| Example 7 | Not included | S-400 | 70,260 | 20.2 | iBuOH | 15.9 | 42.9 | 2,460 | 1.940 | 20.3 | A |
| Example 8 | Not included | S-410 | 70,625 | 14.3 | iBuOH | 15.9 | 42.8 | 1,890 | 1,070 | 20.0 | A |
| Example 9 | Not included | PP1602 | 61,532 | 15.5 | EtOAc | 7.2 | 46.1 | Solidification | 17,670 | 12.1 | B |
| Example 10 | Not included | S-901 | 151,579 | 22.3 | EtOAc | 7.2 | - | Separation | Separation | - | c |
| Example 11 | Not included | PP6102 | 5,672 | 53.7 | EtOAc | 7.2 | - | Separation | Separation | - | c |
| Example 12 | Not included | S-901 | 151,579 | 22.3 | XY | 3.1 | - | Solidification | Solidification | - | c |

### [Comprehensive determination]

The following standards were used to determine A to C.
A: adhesive force was 13.0 N/15 mm or more.
B: adhesive force was 10.0 N/15 mm or more and less than 13.0 N/15 mm.
C: adhesive force was less than 10.0 N/15 mm, or could not be measured.

The comprehensive determination A or B was evaluated as having excellent adhesive force, and particularly, the comprehensive determination A was evaluated as having further excellent adhesive force.

### [Explanation of results]

As shown in the results in Table 3, in Examples 1 to 9 in which the organic solvent having a value of the hydrogen bonding element δh of 7.0 Pa^{0.5} or more in the Hansen solubility parameter (organic solvent E1) was used as the organic solvent and the post-heat treatment viscosity which was measured at 25°C after the heating treatment at 70°C for 1 hour was 20,000 mPa·s or less, the adhesive force of the nonaqueous dispersion composition to the polyolefin-based base material was excellent. In particular, in Examples 1 to 8 in which the organic solvent having a value of the hydrogen bonding element δh of 7.0 Pa^{0.5} or more in the Hansen solubility parameter (organic solvent E1) was used as the organic solvent, the adhesive force of the nonaqueous dispersion composition to the polyolefin-based base material was further excellent.

## Claims

1. A nonaqueous dispersion composition, comprising:
an acrylic resin A;
an olefin resin B; and
an organic solvent E,
wherein the acrylic resin A comprises a constitutional unit derived from a (meth)acrylic monomer a,
the organic solvent E comprises an organic solvent E1 in which a value of a hydrogen bonding element δh in a Hansen solubility parameter is 7.0 MPa^{0.5} or more, and
a post-heat treatment viscosity of the nonaqueous dispersion composition, which is measured at 25°C after a heat treatment at 70°C for 1 hour, is 20,000 mPa·s or less.

2. The nonaqueous dispersion composition according to Claim 1,
wherein a contained amount of the organic solvent E1 with respect to the organic solvent E is 10% by mass or more.

3. A nonaqueous dispersion composition, comprising:
an acrylic resin A;
an olefin resin B; and
an organic solvent E,
wherein the acrylic resin A comprises a constitutional unit derived from a (meth)acrylic monomer a, and
a weight-average molecular weight of the olefin resin B is 20,000 to 150,000.

4. A nonaqueous dispersion composition, comprising:
an acrylic resin A;
an olefin resin B; and
an organic solvent E,
wherein the acrylic resin A comprises a constitutional unit derived from a (meth)acrylic monomer a,
a weight-average molecular weight of the olefin resin B is 20,000 to 150,000, and
the organic solvent E comprises an organic solvent E1 in which a value of a hydrogen bonding element δh in a Hansen solubility parameter is 7.0 MPa^{0.5} or more.

5. The nonaqueous dispersion composition according to Claim 4,
wherein a contained amount of the organic solvent E1 with respect to the organic solvent E is 10% by mass or more.

6. The nonaqueous dispersion composition according to any one of Claims 1 to 5,
wherein the acrylic resin A comprises no constitutional unit y derived from a monomer having a functional group reactive with an acid, or
the acrylic resin A comprises the constitutional unit y and a proportion of a total mass of the constitutional unit y with respect to 100% by mass of a total mass of all constitutional units constituting the olefin resin B is less than 30% by mass.

7. The nonaqueous dispersion composition according to any one of Claims 1 to 6,
wherein a crystal melting enthalpy of the olefin resin B is 5 to 50 J/g.

8. The nonaqueous dispersion composition according to any one of Claims 1 to 6,
wherein a melting point of the olefin resin B is 40°C to 120°C.

9. The nonaqueous dispersion composition according to any one of Claims 1 to 6,
wherein a crystallization temperature of the olefin resin B is 10°C to 60°C.

10. The nonaqueous dispersion composition according to any one of Claims 1 to 6,
wherein the olefin resin B comprises at least one of an ethylene-derived constitutional unit or a propylene-derived constitutional unit, and
a proportion of a total mass of the ethylene-derived constitutional unit and the propylene-derived constitutional unit with respect to a total mass of all constitutional units constituting the olefin resin B is 50% by mass or more.

11. The nonaqueous dispersion composition according to any one of Claims 1 to 6,
wherein the olefin resin B is an ethylene-propylene copolymer or polypropylene.

12. The nonaqueous dispersion composition according to any one of Claims 1 to 6,
wherein Wb/Wa, which represents a mass ratio of a total mass Wb of all constitutional units constituting the olefin resin B to a total mass Wa of the constitutional unit derived from the (meth)acrylic monomer a, is 20/80 to 90/10.

13. The nonaqueous dispersion composition according to any one of Claims 1 to 6, comprising:
an acrylic olefin composite resin C which has the constitutional unit derived from the (meth)acrylic monomer a and a structure derived from the olefin resin B.

14. An adhesive agent composition, comprising:
the nonaqueous dispersion composition according to any one of Claims 1 to 6.

15. A heat-seal lacquer comprising:
the nonaqueous dispersion composition according to any one of Claims 1 to 6.

16. A coating composition comprising:
the nonaqueous dispersion composition according to any one of Claims 1 to 6.
